(19) 

**Europäisches Patentamt**
**European Patent Office**
**Office européen des brevets**

(11) **EP 4 228 018 B1**

(12) **EUROPEAN PATENT SPECIFICATION**

(45) Date of publication and mention
of the grant of the patent:
**15.04.2026 Bulletin 2026/16**

(21) Application number: **21953016.9**

(22) Date of filing: **31.12.2021**

(51) International Patent Classification (IPC):
**H01M 10/0525** (2010.01)

(52) Cooperative Patent Classification (CPC):
**H01M 50/44; H01M 10/052; H01M 10/0525;**
**H01M 50/403; H01M 50/409; H01M 50/411;**
**H01M 50/414; H01M 50/417; H01M 50/426;**
**H01M 50/431; H01M 50/434; H01M 50/443;**
**H01M 50/446; H01M 50/449; H01M 50/451;**

(Cont.)

(86) International application number:
**PCT/CN2021/143846**

(87) International publication number:
**WO 2023/123423 (06.07.2023 Gazette 2023/27)**

(54) **LITHIUM BATTERY SEPARATOR COMPRISING POROUS PVDF-BASED RESIN COATING AND PREPARATION METHOD THEREFOR**

LITHIUMBATTERIESEPARATOR MIT PORÖSER HARZBESCHICHTUNG AUF PVDF-BASIS UND HERSTELLUNGSVERFAHREN DAFÜR

SÉPARATEUR DE BATTERIE AU LITHIUM COMPRENANT UN REVÊTEMENT DE RÉSINE À BASE DE PVDF POREUX ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2021 CN 202111635856**

(43) Date of publication of application:
**16.08.2023 Bulletin 2023/33**

(73) Proprietor: **Sinoma Lithium Battery Separator Co., Ltd.**
**Zaozhuang, Shandong 277500 (CN)**

(72) Inventors:
• **BAI, Yaozong**
**Zaozhuang, Shandong 277500 (CN)**
• **MA, Pingchuan**
**Zaozhuang, Shandong 277500 (CN)**
• **LIU, Gaojun**
**Zaozhuang, Shandong 277500 (CN)**
• **GAO, Feifei**
**Zaozhuang, Shandong 277500 (CN)**

• **DU, Jingran**
**Zaozhuang, Shandong 277500 (CN)**
• **ZHANG, Xujie**
**Zaozhuang, Shandong 277500 (CN)**
• **ZHOU, Yang**
**Zaozhuang, Shandong 277500 (CN)**
• **ZHAI, Mengmeng**
**Zaozhuang, Shandong 277500 (CN)**
• **HAN, Chao**
**Zaozhuang, Shandong 277500 (CN)**
• **WEI, Ming**
**Zaozhuang, Shandong 277500 (CN)**
• **ZHANG, Sen**
**Zaozhuang, Shandong 277500 (CN)**
• **SUN, Yuan**
**Zaozhuang, Shandong 277500 (CN)**

(74) Representative: **Huang, Liwei**
**Cäcilienstraße 12**
**40597 Düsseldorf (DE)**

(56) References cited:
**WO-A1-2017/107436      CN-A- 108 305 977**
**CN-A- 110 137 414      CN-A- 111 192 999**

**(Cont. next page)**

**CN-A- 111 518 442**     **CN-U- 208 706 747**
**JP-A- 2014 112 553**     **US-A1- 2018 212 271**

(52) Cooperative Patent Classification (CPC): (Cont.)
**H01M 50/457; H01M 50/489; H01M 50/491;**
Y02E 60/10

## EP 4 228 018 B1

### Description

The present disclosure claims the priority of Chinese Patent Application No. 2021116358562, entitled "Lithium Battery Separator Including Porous PVDF-based Resin Coating and Preparation Method Therefor", and filed to the China National Intellectual Property Adminstration on Dec. 30, 2021.

### Field

The present disclosure relates to lithium battery separators and lithium batteries, and in particular, relates to a lithium battery separator comprising a porous PVDF-based resin coating, a preparation method for the a lithium battery separator, and a lithium battery.

### Background

In lithium batteries, a separator is mainly used to separate a positive electrode from a negative electrode of a battery to prevent a short circuit due to contact of the two electrodes. In addition, the separator has a function of allowing electrolyte ions to pass through. Polyvinylidene fluoride (PVDF) based resins are generally used as an adhesive layer in the prior art from the viewpoint of thermal stability, easy formation of a porous adhesive coating and electrolyte wettability. In order to increase a unit energy density of the lithium battery, it is generally desirable that the thickness of the separator is as thin as possible. Further, in order to increase the bonding of the separator to positive and negative electrode active materials, there are higher requirements for the type and thickness of the adhesive layer, and in combination with requirements for ionic conductivity, thermal shrinkage, and mechanical strength of the separator, how to further design the adhesive layer of polyvinylidene fluoride (PVDF) based resins is particularly critical.

### Summary

Thus far, there is no concern in the prior art on how to take into account the coating thickness, bonding strength, thermal shrinkage, and ionic conductivity performances of a lithium battery separator including a porous PVDF-based resin coating to improve the use performance of a lithium battery.

In view of this technical problem, the inventors, after systematic research, finally found that when a ratio of a bonding strength to an increment in Gurley gas permeability value caused by coating and a ratio of a bonding strength to a surface density per unit thickness are limited, a porous PVDF-based resin coating with excellent thickness, increment in Gurley gas permeability value caused by coating, bonding strength, and thermal shrinkage can be obtained, and the formed lithium battery separator is also excellent in cycle performance and heat resistance.

The invention is set out in the appended set of claims.

Specific technical solutions of the present disclosure are as follows:

1. a lithium battery separator including a porous PVDF-based resin coating, wherein the porous PVDF-based resin coating is located on at least one surface of a base film, and the porous PVDF-based resin coating on a single side has a thickness of 0.5-3.5 $\mu$m, has a ratio of a bonding strength (N/m) to an increment in Gurley gas permeability value caused by coating (s/100cc) of greater than or equal to 0.25, and a ratio of a bonding strength (N/m) to a surface density per unit coating (g/m$^2$/$\mu$m) of greater than or equal to 10.

2. The lithium battery separator as above, wherein PVDF-based resin in the porous PVDF-based resin coating includes high molecular weight PVDF and low molecular weight PVDF, wherein the high molecular weight PVDF has a weight average molecular weight of 800,000-1,200,000, the low molecular weight PVDF has a weight average molecular weight of 200,000-500,000, and a weight ratio of the high molecular weight PVDF to the low molecular weight PVDF is 7:1 to 1:7.

3. The lithium battery separator as above, wherein the porous PVDF-based resin coating further includes inorganic particles, and the content of the inorganic particles is 40-80wt% based on a total weight of the porous PVDF-based resin coating.

4. The lithium battery separator as above, wherein the water content of its slurry is less than 5wt% during preparation of the porous PVDF-based resin coating.

5. The lithium battery separator as above, wherein the water content of a coagulating bath is 30wt%-70wt% during preparation of the porous PVDF-based resin coating.

6. The lithium battery separator as above, wherein drying is carried out at a temperature of 60-100°C during preparation of the porous PVDF-based resin coating.

7. A preparation method for a lithium battery separator including a porous PVDF-based resin coating, including the specific steps of:

step 1: dispersing PVDF-based resin and optionally inorganic particles into a solvent to form a coatable slurry, wherein the solvent comprises a good solvent selected from acetone, methyl ethyl ketone, N-methyl pyrrolidone, dimethyl acetamide, diethyl formamide, diethyl acetamide; wherein the water content of the slurry on the whole is less than 5 wt%; and

step 2: coating at least one surface of a base film with the coatable slurry, dipping in a coagulating bath at room temperature for solidifying the resulting coating to form the porous PVDF-based resin coating, cleaning, and drying to obtain the lithium battery separator;

wherein the water content of the coagulating bath is 30wt%-70wt%, and the drying is carried out at a temperature of 60°C-100°C.

8. The preparation method as above, wherein the PVDF-based resin includes high molecular weight PVDF and low molecular weight PVDF, wherein the high molecular weight PVDF has a weight average molecular weight of 800,000-1,200,000, the low molecular weight PVDF has a weight average molecular weight of 200,000-500,000, and a weight ratio of the high molecular weight PVDF to the low molecular weight PVDF is 7:1 to 1:7.

9. The preparation method as above, wherein the content of the inorganic particles is 40-80wt% based on a total weight of the porous PVDF-based resin coating.

10. A lithium battery, including a positive electrode, a negative electrode, a non-aqueous electrolyte, and the lithium battery separator as above or the lithium battery separator obtained by the method as above.

The present disclosure has beneficial effects as follows:

the lithium battery separator including the porous PVDF-based resin coating obtained according to the present disclosure has excellent bonding performance to positive electrodes, high temperature dimensional stability, and good gas permeability, so that the finally formed lithium battery has high energy density and excellent cycling performance, thereby solving the technical problem in the prior art that the bonding strength and ionic conductivity of the separator cannot be taken into account.

## Brief Description of the Drawings

FIG. 1 illustrates an SEM image showing an apparent morphology of a lithium battery separator including a porous PVDF-based resin coating in Example 2.

FIG. 2 illustrates an SEM image showing an apparent cross-section of the lithium battery separator including the porous PVDF-based resin coating in Example 2.

FIG. 3 illustrates an SEM image showing an apparent morphology of a lithium battery separator including a porous PVDF-based resin coating in Example 12.

## Detailed Description of the Embodiments

In order to better interpret the present disclosure, reference is made to embodiments of the present disclosure to describe the present disclosure in detail, and the main contents of the present disclosure are further illustrated in conjunction with specific examples. However, the contents of the present disclosure are not limited to the following examples. Where specific techniques or conditions are not indicated in the examples, the techniques or conditions are performed according to the techniques or conditions described in the literatures in the prior art or in accordance with the product specifications. The reagents or instruments used, without any indication of the manufacturer, are a conventional product commercially available.

[Base film]

The base film is generally a polyolefin porous base film, or may be selected from conventional polyolefin porous base films suitable for lithium battery separators, including one or more copolymers or more blends selected from polyethylene, polypropylene, polybutene, and poly(4-methylpentene).

From the viewpoint of exhibiting a closing function, a polyolefin microporous film preferably includes polyethylene, and the content of polyethylene is preferably 95% by mass or more of the total content of the base film.

In one embodiment, the polyolefin porous base film is a monolayer polyolefin microporous film. In another embodiment, the polyolefin porous base film is a polyolefin microporous film having a laminated structure of two or more layers.

Polyolefin contained in the polyolefin porous base film preferably has a weight average molecular weight (Mw) of 100,000 to 5,000,000. When the weight average molecular weight is 100,000 or more, the well mechanical property can be ensured. On the other hand, when the weight average molecular weight is 5,000,000 or less, polyolefin has the good closing property, and is easy for film formation.

The thickness of the polyolefin porous base film is not particularly limited, and is preferably $5\mu m$ to $30\mu m$. The polyolefin porous base film is a porous polymer film formed mainly by stretching.

A method of manufacturing the polyolefin porous base film according to exemplary embodiments of the present disclosure is not limited, provided that the polyolefin porous base film is manufactured by a person skilled in the art. In an exemplary embodiment, the polyolefin porous base film can be manufactured by a dry or wet process. The dry process is a process of forming a polyolefin film, and then stretching the film at a low temperature to form micropores. However, the stretching may cause microcracks in crystalline flakes of polyolefin. The wet process is a process of mixing polyolefin-based resin and a diluent at a high temperature at which the polyolefin-based resin is melted to form a single phase, subjecting the polyolefin and the diluent to phase separation during cooling, and then extracting the diluent to form pores therein. The wet process is a process of imparting mechanical strength and transparency by the stretching/extraction process after phase separation. Compared with the dry process, a film formed by the wet process has small thickness, uniform pore size, and excellent physical properties. Therefore, the wet process is more preferred.

From the viewpoint of appropriate film resistance and closing function, a porous substrate preferably has a porosity of 20% to 60% and an average pore size of 15 nm to 100nm.

From the viewpoint of improving the manufacturing yield, a puncture strength of the polyolefin porous base film is preferably 200 g or more.

[Porous PVDF-based resin coating]

In the present disclosure, the porous PVDF-based resin coating is used as an adhesive layer, wherein the PVDF-based resin is present in an amount of 90wt% or more, or 95wt% or more, or 99wt% or more, based on all adhesive resins. The PVDF-based resin specifically includes a vinylidene fluoride homopolymer, a copolymer of vinylidene fluoride with other copolymerizable monomers, or a mixture thereof. Specific examples of monomers copolymerizable with vinylidene fluoride may include at least one selected from the group consisting of: tetrafluoroethylene, hexafluoropropylene, trifluoroethylene, chlorofluoroethylene, 1,2-difluoroethylene, perfluoro(methylvinyl) ether, perfluoro(ethylvinyl) ether, perfluoro(propylvinyl) ether, difluoro(1,3-dioxole), perfluoro(2,2-dimethyl-1,3-dioxole), trichloroethylene, and fluoroethylene.

Control of the molecular weight of the PVDF-based resin will affect the bonding property, pore-forming property, and dimensional stability performance of the PVDF resin. The PVDF-based resin thus includes a first high molecular weight PVDF resin and a second low molecular weight PVDF resin. The high molecular weight PVDF has a weight average molecular weight of 800,000-1,200,000, the low molecular weight PVDF has a weight average molecular weight of 200,000-500,000, and a weight ratio of the high molecular weight PVDF to the low molecular weight PVDF is 7:1 to 1:7. Based on the final effect, the first high molecular weight PVDF resin may have a significant contribution to bonding of inorganic particles to prevent de-embedding and dimensional stability, and the second low molecular weight PVDF resin may have an impact on film forming properties, pore-forming properties, and interfacial adhesion.

Preferably, the porous PVDF-based resin coating further includes inorganic particles, which may be selected from any inorganic fillers that are stable with respect to electrolytes and electrochemically stable, and in particular may be selected from one or more of the followng materials:

an oxide ceramic-based material, including alumina, silica, titania, zirconia, magnesia, ceria, zinc oxide, and iron oxide;
a nitride-based material, including silicon nitride, titanium nitride, and boron nitride;
a metal hydroxide-based material, including aluminum hydroxide, magnesium hydroxide, calcium hydroxide, chromium hydroxide, zirconium hydroxide, cerium hydroxide, and nickel hydroxide; and
boehmite, magnesium carbonate, magnesium sulfate, barium sulfate, calcium carbonate, wollastonite, silicon carbide, and the like, wherein alumina or boehmite is preferred.

The content of the inorganic particles is 40-80wt%, futher preferably 50-75wt%, and more preferably 60-70wt% based on the total weight of the porous PVDF-based resin coating.

[Slurry]

In order to obtain the porous PVDF-based resin coating, a coatable slurry needs to be prepared first from the PVDF-based resin, optionally inorganic particles, and a good solvent. Examples of the good solvent include acetone, methyl ethyl ketone, N-methyl pyrrolidone, and polar amide solvents such as dimethyl acetamide, diethyl formamide, and diethyl acetamide. Water in the slurry as a poor solvent for phase separation is not essential, and in fact the water content in the slurry on the whole is preferably 5 wt% or less.

From the viewpoint of forming a good porous structure, the content of the PVDF-based resin and the content of the inorganic particles in the slurry are preferably 6wt% to 20wt%, preferably 8wt% to 15wt%, and the balance is the good solvent.

[Coating method]

The coatable slurry first coats at least one surface of the base film. Preferably, the coatable slurry coats the above porous substrate by dip coating, air knife coating, curtain coating, roll coating, wire rod coating, photogravure coating, mold coating, or the like, to form a coating film. Among these coating methods, the photogravure coating or the mold coating is preferred as the coating method of the above coating liquid.

The base film coated with the slurry is treated with a coagulating liquid capable of solidifying the PVDF resin. Thus, the PVDF porous resin is solidified to form a porous PVDF resin layer. Examples of a method of treating with the coagulating liquid include a method of spraying the coagulating liquid on a substrate coated with the slurry for coating, a method of dipping the substrate in a bath in which the coagulating liquid is added (a coagulating bath), and the like. The coagulating liquid is not particularly limited, provided that the coagulating liquid is a liquid capable of solidifying the PVDF resin, preferably water, or preferably a solution obtained by mixing an appropriate amount of water with a solvent used for the slurry. The content of water in the coagulating bath is 30wt%-70wt%, preferably 35wt%-65wt%, further preferably 40wt%-60wt%. The temperature of the coagulating bath is room temperature.

Then, the lithium battery separator including the porous PVDF-based resin coating and treated with the coagulating bath is dried. As for the drying conditions, the air speed and drying temperature are not particularly limited, provided that the base film does not shrink due to softening, and the PVDF resin and the inorganic particles can be sufficiently bonded. Examples of the drying process include heat transfer drying (adhesion to a high-heat object), convective heat transfer (hot air), radiative heat transfer (infrared ray), and other methods (microwave, induction heating, etc.). Among the above manufacturing methods, convective heat transfer or radiative heat transfer is preferred because of the need to have a precise and uniform drying speed in a width direction. In addition, in order to achieve the uniform drying speed in the width direction during constant-rate drying, it is preferred to use a method that can reduce the total mass transfer coefficient during drying while maintaining a controlled wind speed, in the case that the convective heat transfer drying is used. Specifically, hot air is transported in a direction parallel to a support substrate, and parallel to or perpendicular to a transport direction of the substrate. The drying temperature is preferably controlled at 60°C-100°C, preferably 70°C-90°C, more preferably 75°C-85°C.

With different examples, it is found that different water contents of the coagulating bath and different drying temperatures have an effect on the gas permeability increment and bonding strength of the coating.

[Lithium battery]

The lithium battery of the present disclosure has a positive electrode, a negative electrode, an electrolyte, and a separator disposed between the positive electrode and the negative electrode according to the present disclosure. Specifically, the lithium battery is of a structure in which a battery element and the electrolyte are encapsulated together into an external packaging material, and the battery element is obtained by oppositely positioning the negative electrode and the positive electrode across the separator.

The positive electrode is, for example, of a structure obtained by molding an active material layer containing a positive electrode active material and a binder resin on a current collector.

Examples of the positive electrode active material include conventional positive active materials in the art, for example, a lithium-containing transition metal oxide, and specifically, $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCO_{1/2}Ni_{1/2}O_2$, and $LiAl_{1/4}Ni_{3/4}O_2$. Examples of the binder resin include polyvinylidene fluoride-based resin, a styrene-butadiene copolymer, and the like. A conductive auxiliary may also be contained. Examples of the conductive auxiliary include carbon materials such as acetylene black, Ketjen black, and graphite powder. Examples of the current collector include an aluminum foil, a titanium foil, and a stainless steel foil which have a thickness of $5\mu m$-$20\mu m$.

Examples of the negative electrode include a structure obtained by molding an active material layer including a negative electrode active material and a binder resin on a current collector. The active material layer may further include a conductive auxiliary. Examples of the negative electrode active material include materials capable of absorbing lithium electrochemically. Specifically, examples of the negative electrode active material include carbon materials; alloys of silicon, tin, aluminum, and the like with lithium; Wood's alloys; and the like. The binder resin, the conductive auxiliary, and the current collector are substantially the same as those of the positive electrode portion. In addition, a metal lithium foil may be used as the negative electrode instead of the above negative electrode.

The electrolyte is a solution obtained by dissolving a lithium salt in a non-aqueous solvent. Examples of the electrolyte may be common electrolyte systems in the art. Examples of the lithium salt include $LiPF_6$, $LiBF_4$, $LiClO_4$, and the like. Examples of the non-aqueous solvent include cyclic carbonates such as ethylene carbonate, propylene carbonate, ethylene fluorocarbonate, ethylene difluorocarbonate, and vinylene carbonate; chain carbonates such as dimethyl carbonate, diethyl carbonate, methyl ethyl carbonate, vinyl carbonate and fluorine derivatives thereof; cyclic esters such as gamma-butyrolactone, gamma-valerolactone, and the like, which can be used alone or in combination.

Examples

Hereinafter, the separator and a lithium secondary battery including the separator described in the present disclosure will be described more specifically by the examples. However, the embodiments of the present disclosure are not limited to the following examples.

<Evaluation method>

(1) Film thickness

A micrometer was used to measure the thickness of a separation base film, and then to measure the thickness of the coated base film, which subtracted the thickness of the separation base film to obtain the thickness of the porous coating.

(2) Average particle size

A particle size was measured by using a particle size measuring device (MicrotracUPA150, NIKKISO Co., LTD.). The measurement conditions were set as a load index of 0.15-0.3 and the measurement time of 300 seconds, and a particle size value of 50% of the obtained data was recorded as the particle size.

(3) Average pore size of base film

The pore size distribution of a porous film was measured by using a AAQ-3K-A-1 water-squeezing porosimeter of Porous Material Inc, USA. Water was used as a test solution. Water was squeezed into pore channels of the film under pressure, and the corresponding pressure of water squeezed into different pore sizes followed the Washburn equation. Thus, a series of pore structure parameters of the film were calculated.

(4) Determination of weight average molecular weight of PVDF resin

The PVDF resin was dissolved in DMF at a concentration of 1.0mg/ml to obtain a sample solution. 50 ml of the sample solution was used to perform gel permeation chromatography (GPC) determination under the following conditions to obtain the weight average molecular weight (PMMA conversion).

Device: HLC-8220GPC (Tosoh Corporation)
Column: Shodex KF-606M, KF-601
Mobile phase: 0.6ml/min DMF
Detector: Differential refractive index detector

(5) Gurley gas permeability value

A 100mm×100mm separator sample with a porous film was cut, and tested using a Gurley 4110N gas permeability tester (USA) under a 100cc test gas pattern. The time at which all of the test gas passed through the separator sample with the porous film was recorded as a Gurley value. The Gurley value of the porous film was a value obtained by subtracting the Gurley value of the separator without the porous film (i.e., a pure porous substrate) from the Gurley value of the separator with the porous film.

(6) Peel strength between porous substrate and porous layer

An adhesive tape (model: 550R-12, Scotch) having a width of 12 mm and a length of 15 cm was attached to the surface of the porous layer on a side of the separator. The separator was cut so that its width and length were in consistent with the width and length of the adhesive tape to prepare a test sample. When the adhesive tape was attached to the separator, the length direction was aligned with the machine direction (MD) of the separator. It is to be noted that the adhesive tape is used as a support for peeling off the porous layer on the side.

The test sample was placed in an atmosphere at a temperature of 23±1°C and a relative humidity of 50±5% for 24 hours or more, and the following measurement was performed in the same atmosphere.

The adhesive tape was peeled off with the porous layer immediately below the adhesive tape by about 10 cm, so that a laminate (1) of the adhesive tape and the porous layer was separated from a laminate (2) of the porous substrate and a porous layer on the other side by about 10 cm. An end of the laminate (1) was fixed to an upper gripper of TENSILON (RTC-1210A, Orientec Corp.), and an end of the laminate (2) was fixed to a lower gripper of TENSILON. The test sample was suspended in the gravity direction, so that the stretching angle (the angle of the laminate (1) with respect to the test sample) becomes 180°. The laminate (1) was stretched at a stretching speed of 20mm/min, and the load when the laminate (1) was peeled from the porous substrate was measured. Loads from 10mm to 40mm after the start of the measurement were taken at an interval of 0.4mm and the average thereof was taken as the peel strength.

(7) Bonding strength

A test was performed with reference to the requirements of GB/T 2792.

1) A4 papers and separators were stacked together in an order of A4 paper/separator/separator/A4 paper, wherein the separator coating was opposite to the separator coating;
2) the stacked A4 papers and separators were subjected to thermoplastic treatment at a temperature of 100°C; and
3) the separator after thermoplastic treatment was cut into elongated strips of 200 mm in length and 25 mm in width, a distance between clamps was (100±5) mm, and a test speed was (50±10) mm/min.

(8) Thermal shrinkage

A test was performed with reference to the requirements of GB/T12027-2004.

1) A separator having a size of 15*15 cm was cut, the longitudinal and transverse directions were marked on a surface of the separator;
2) lengths of a sample in the longitudinal and transverse directions were measured with a ruler, repectively;
3) the sample was spread in a clamp and then placed in an oven at a temperature of 130°C for 60 min;
4) after heating, the sample was taken out. After the temperature was restored to room temperature, the marked lengths in the longitudinal and transverse directions were measured again, respectively. The shrinkage was calculated according to the following formula, and the average value of several samples was taken as the shrinkage.

$$\Delta L = \frac{L - L_0}{L_0} \quad \Delta T = \frac{T - T_0}{T_0}$$

$\Delta L$ - thermal shrinkage of the sample in the longitudinal direction, expressed in %;
$L_0$ - the length of the sample in the longitudinal direction before heating, in millimeters (mm);
$L$ - the length of the sample in the longitudinal direction after heating, in millimeters (mm);
$\Delta T$ - thermal shrinkage of the sample in the transverse direction, expressed in %;
$T_0$ - the length of the sample in the transverse direction before heating, in millimeters (mm);
$T$ - the length of the sample in the transverse direction after heating, in millimeters (mm).

(9) Puncture strength of separator

A flaky sample was prepared, fixed under a test clamp, and punctured on a puncture tester using a puncture needle having a diameter of 1 mm at a speed of 50mm/min through a high-speed tensile machine and a puncture clamp. A top puncture force F was determined after data stabilization to calculate the puncture strength (in gf) as F/9.8*1000.

Example 1:

Based on 100 parts by weight of a coatable slurry, 3 parts by weight of PVDF resin having a weight average molecular weight of 900,000-1.1 million, 2 parts by weight of PVDF resin having a weight average molecular weight of 400,000-500,000, and 7.5 parts by weight of $Al_2O_3$ particles were added into a dimethylacetamide (DMAC)/water dispersion system (with the water content of 2wt%), and dissolved at 50°C for about 3 hours to form an adhesive. Both surfaces of a polyethylene porous substrate (a thickness of $9\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 5.36 $\mu$m, and the total surface density of the coatings on both sides is 7.24 g/m$^2$.

Example 2:

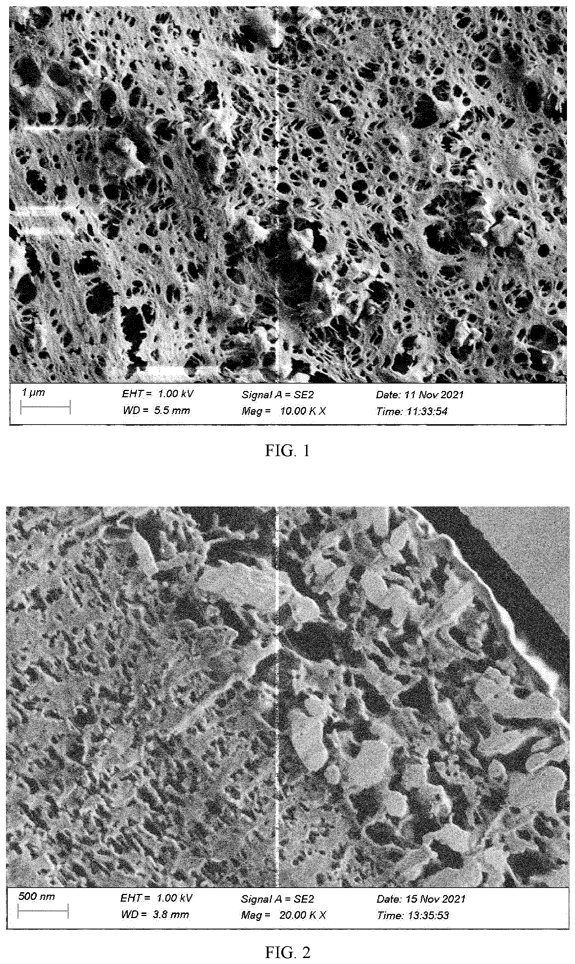

Based on 100 parts by weight of a coatable slurry, 3 parts by weight of PVDF resin having a weight average molecular weight of 900,000-1.1 million, 1.5 parts by weight of PVDF resin having a weight average molecular weight of 400,000-500,000, and 7.5 parts by weight of Al$_2$O$_3$ particles were added into dimethylacetamide (DMAC), and dissolved at 50°C for about 3 hours to form an adhesive. Both surfaces of a polyethylene porous substrate (a thickness of $9\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 3.4 $\mu$m, and the total surface density of the coatings on both sides is 4.92 g/m$^2$. The apparent morphology of the separator is shown in FIG. 1, and the cross-sectional morphology of the separator is shown in FIG. 2.

Example 3:

Based on 100 parts by weight of a coatable slurry, 2 parts by weight of PVDF resin having a weight average molecular weight of 900,000-1.1 million, 3 parts by weight of PVDF resin having a weight average molecular weight of 400,000-500,000, and 7.5 parts by weight of Al$_2$O$_3$ particles were added into dimethylacetamide (DMAC), and dissolved at 50°C for about 3 hours to form an adhesive. Both surfaces of a polyethylene porous substrate (a thickness of $7\mu$m, a porosity of 35%, an average pore size of 70nm, and a puncture strength of 370gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 4.44 $\mu$m, and the total surface density of the coatings on both sides is 5.14 g/m$^2$.

Example 4

Based on 100 parts by weight of a coatable slurry, 2 parts by weight of PVDF resin having a weight average molecular weight of 900,000-1.1 million, 3 parts by weight of PVDF resin having a weight average molecular weight of 400,000-500,000, and 7.5 parts by weight of Al$_2$O$_3$ particles were added into dimethylacetamide (DMAC), and dissolved at 50°C for about 3 hours to form an adhesive. Both surfaces of a polyethylene porous substrate (a thickness of $7\mu$m, a porosity of 35%, an average pore size of 70nm, and a puncture strength of 370gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is controlled to be 6.6 $\mu$m, and the total surface density of the coatings on both sides is controlled to be 7.2 g/m$^2$ compared with Example 3.

Example 5

Compared with Example 1, a ratio of DMAC to water in the coagulating bath was 6:4. The total thickness of the resulting coatings on both sides is 4.44 $\mu$m, and the total surface density of the coatings on both sides is 5.14 g/m$^2$.

Example 6

Compared with Example 1, a ratio of DMAC to water in the coagulating bath was 4:6. The total thickness of the resulting coatings on both sides is 5.48 $\mu$m, and the total surface density of the coatings on both sides is 5.08 g/m$^2$.

Example 7

Compared with Example 1, a ratio of DMAC to water in the coagulating bath was 3:7. The total thickness of the resulting coatings on both sides is 4.92 $\mu$m, and the total surface density of the coatings on both sides is 5.16 g/m$^2$.

Example 8

Compared with Example 2, the drying temperature was controlled at 70°C. The total thickness of the resulting coatings on both sides is 3.4 $\mu$m, and the total surface density of the coatings on both sides is 5.32 g/m$^2$.

Example 9

Compared with Example 2, the drying temperature was controlled at 85°C. The total thickness of the resulting coatings on both sides is 3.72 $\mu$m, and the total surface density of the coatings on both sides is 5.06 g/m$^2$.

Example 10

Compared with Example 2, the drying temperature was controlled at 100°C. The total thickness of the resulting coatings on both sides is 4.16 $\mu$m, and the total surface density of the coatings on both sides is 5.68 g/m$^2$.

Example 11

Based on 100 parts by weight of a coatable slurry, 0.6 part by weight of PVDF resin having a weight average molecular weight of 900,000-1.1 million, and 4.2 parts by weight of PVDF resin having a weight average molecular weight of 400,000-500,000 were added into dimethylacetamide (DMAC), and dissolved at 50°C for about 3 hours to form an adhesive. Both surfaces of a polyethylene porous substrate (a thickness of 9$\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is controlled to be 2.0 $\mu$m, and the total surface density of the coatings on both sides is controlled to be 1.4 g/m$^2$ compared with Example 3.

Example 12

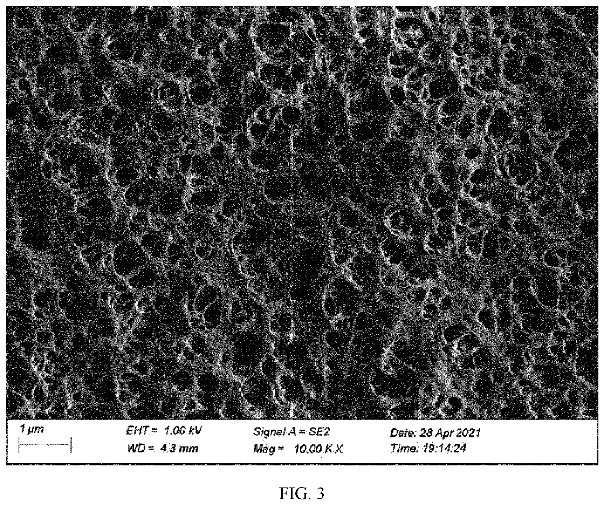

Based on 100 parts by weight of a coatable slurry, 0.6 part by weight of PVDF resin having a weight average molecular weight of 900,000-1.1 million, and 4.2 parts by weight of PVDF resin having a weight average molecular weight of 400,000-500,000 were added into dimethylacetamide (DMAC), and dissolved at 50°C for about 3 hours to form an adhesive. Both surfaces of a single-sided ceramic-coated polyethylene porous substrate (a total thickness of coated films being 9$\mu$m, a thickness of a ceramic layer being 2$\mu$m, and a puncture strength of 470gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is controlled to be 1.6 $\mu$m, and the total surface density of the coatings on both sides is controlled to be 1.12 g/m$^2$ compared with Example 3. The surface morphology of the separator is shown in FIG. 3.

Example 13

Based on 100 parts by weight of a coatable slurry, 1.2 parts by weight of PVDF resin having a weight average molecular weight of 900,000-1.1 million, and 3.6 parts by weight of PVDF resin having a weight average molecular weight of 400,000-500,000 were added into dimethylacetamide (DMAC), and dissolved at 50°C for about 3 hours to form an adhesive. Both surfaces of a single-sided ceramic-coated polyethylene porous substrate (a total thickness of coated films being 9$\mu$m, a thickness of a ceramic layer being 2$\mu$m, and a puncture strength of 470gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is controlled to be 1.2 $\mu$m, and the total surface density of the coatings on both sides is controlled to be 0.936 g/m$^2$ compared with Example 3.

Comparative example 1:

Based on 100 parts by weight of a coatable slurry, 3 parts by weight of PVDF resin having a weight average molecular weight of 900,000-1.1 million, 1 part by weight of PVDF resin having a weight average molecular weight of 200,000-500,000, and 7.5 parts by weight of $Al_2O_3$ particles were added into dimethylacetamide (DMAC), and dissolved at 50°C for about 3 hours to form an adhesive. Both surfaces of a polyethylene porous substrate (a thickness of 9$\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 2.88 $\mu$m, and the total surface density of the coatings on both sides is 4.2 g/m$^2$.

Comparative example 2

Based on 100 parts by weight of a coatable slurry, 3 parts by weight of PVDF resin having a weight average molecular weight of 900,000-1.1 million, 1 part by weight of PVDF resin having a weight average molecular weight of 200,000-500,000, and 10 parts by weight of $Al_2O_3$ particles were added into dimethylacetamide (DMAC), and dissolved at 50°C for about 3 hours to form an adhesive. Both surfaces of a polyethylene porous substrate (a thickness of 9$\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 4.44 $\mu$m, and the total surface density of the coatings on both sides is 5.64 g/m$^2$.

Comparative example 3

Based on 100 parts by weight of a coatable slurry, 1.6 parts by weight of PVDF resin having a weight average molecular weight of 900,000-1.1 million, 2.4 parts by weight of PVDF resin having a weight average molecular weight of 200,000-500,000, and 7.5 parts by weight of $Al_2O_3$ particles were added into dimethylacetamide (DMAC), and dissolved at 50°C for about 3 hours to form an adhesive. Both surfaces of a polyethylene porous substrate (a thickness of 9$\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 4.48 $\mu$m, and the total surface density of the coatings on both sides is 5.06 g/m$^2$.

Comparative example 4

Based on 100 parts by weight of a coatable slurry, 1.6 parts by weight of PVDF resin having a weight average molecular weight of 900,000-1.1 million, 2.4 parts by weight of PVDF resin having a weight average molecular weight of 200,000-500,000, and 7.5 parts by weight of $Al_2O_3$ particles were added into a dimethylacetamide (DMAC)/water dispersion system (with the water content of 6wt%), and dissolved at 50°C for about 3 hours to form an adhesive. Both surfaces of a polyethylene porous substrate (a thickness of 9$\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is 4.0 $\mu$m, and the total surface density of the coatings on both sides is 4.6 g/m$^2$.

Comparative example 5

Based on 100 parts by weight of a coatable slurry, 2 parts by weight of PVDF resin having a weight average molecular weight of 900,000-1.1 million, 3 parts by weight of PVDF resin having a weight average molecular weight of 200,000-500,000, and 7.5 parts by weight of $Al_2O_3$ particles were added into a dimethylacetamide (DMAC)/water dispersion system (with the water content of 6wt%), and dissolved at 50°C for about 3 hours to form an adhesive. Both surfaces of a polyethylene porous substrate (a thickness of 9$\mu$m, a porosity of 35%, an average pore size of 70nm, and a puncture strength of 450gf) were coated with a slurry for forming a porous coating by a gravure roller at 23°C under a relative humidity of 20%, and the resulting coatings were solidified by dimethylacetamide/water coagulating liquid (a ratio of DMAC to water in a coagulating bath was 5:5), washed with purified water, and dried at 80°C to manufacture a separator having porous coatings. The total thickness of the resulting coatings on both sides is controlled to be 4.96 μm, and the total surface density of the coatings on both sides is controlled to be 5.74 g/m$^2$ compared with Example 4.

Comparative example 6

Compared with Example 1, a ratio of DMAC to water in the coagulating bath was 8:2. The total thickness of the resulting coatings on both sides is 4.48 μm, and the total surface density of the coatings on both sides is 5.32 g/m$^2$.

Comparative example 7

Compared with Example 2, the drying temperature was controlled at 55°C. The total thickness of the resulting coatings on both sides is 3.4 μm, and the total surface density of the coatings on both sides is 4.62 g/m$^2$.

Table 1 shows the related performance indexes of the separators in Examples 1-13 and Comparative examples 1-7. Thus it can be seen that although there are a number of influencing factors, the coatings have more excellent bonding performance to positive eletrodes, high temperature dimensional stability and good gas permeability when the coatings have a thickness within a certain range and meet the two conditions that the bonding strength (N/m)/increment in Gurley gas permeability value caused by coating (s/100cc) is greater than or equal to 0.25 and the bonding strength (N/m)/the surface density per unit coating (g/m$^2$/μm) is greater than or equal to 10, thereby resulting in good electrical performance of the corresponding lithium batteries.

When any meaning or definition of a term in the present disclosure is inconsistent with any meaning or definition of the same term in the documents incorporated by reference, it shall be subject to the meaning or definition assigned to the term in the present disclosure.

Table 1: Related performance indexes of separators in Examples 1-13 and Comparative examples 1-7

| No. | Increme nt in Gurley gas permeab ility value caused by coating (s/100cc ) | Peel strength (N/m) | Bonding strength (N/m) | Thermal shrinkage | | Coating surface density/ coating thicknes s | Bonding strength/ surface density per unit coating | Bonding strength/ coating gas permeab ility |
| | | | | MD (%) | TD (%) | | | |
| 1 | 58.25 | 404 | 15.23 | 4.5 | 2.1 | 1.35 | 11.28 | 0.26 |
| 2 | 47.25 | 450 | 15.90 | 4.7 | 2.2 | 1.45 | 10.99 | 0.34 |
| 3 | 47.25 | 258 | 21.33 | 4.5 | 2 | 1.16 | 18.42 | 0.45 |
| 4 | 43 | 49 | 16 | 4.5 | 1.7 | 1.09 | 14.67 | 0.37 |
| 5 | 47.25 | 258 | 21.22 | 4.5 | 2 | 1.16 | 18.33 | 0.45 |
| 6 | 47.75 | 242 | 16.89 | 4.8 | 1.8 | 0.93 | 18.22 | 0.35 |
| 7 | 45.5 | 245 | 14.83 | 5 | 2 | 1.05 | 14.14 | 0.33 |
| 8 | 47.25 | 450 | 15.90 | 4.5 | 2.1 | 1.45 | 10.99 | 0.34 |
| 9 | 45.75 | 376 | 17.25 | 4.2 | 2.2 | 1.36 | 12.68 | 0.38 |
| 10 | 51.75 | 444 | 16.30 | 4 | 1.7 | 1.37 | 11.94 | 0.31 |
| 11 | 38 | 189 | 10.02 | 10 | 9 | 0.76 | 17.33 | 0.34 |
| 12 | 40.1 | 189 | 10.51 | 1.7 | 1.1 | 0.76 | 17.33 | 0.26 |
| 13 | 45.10 | 192 | 15.31 | 1.7 | 1.2 | 0.78 | 19.70 | 0.33 |
| D1 | 39.75 | 354 | 13.76 | 5.3 | 2.4 | 1.46 | 9.44 | 0.35 |
| D2 | 56.5 | 182 | 9.80 | 4.7 | 2 | 1.27 | 7.72 | 0.17 |
| D3 | 32 | 27 | 7.5 | 4.7 | 1.8 | 1.13 | 6.64 | 0.23 |
| D4 | 27.5 | 20 | 6.2 | 4.8 | 1.7 | 1.15 | 5.39 | 0.23 |
| D5 | 37 | 15 | 9.3 | 4.7 | 1.7 | 1.16 | 8.04 | 0.25 |
| D6 | 75.61 | 201 | 15.73 | 4.8 | 1.8 | 1.19 | 13.25 | 0.21 |

(continued)

| No. | Increme nt in Gurley gas permeab ility value caused by coating (s/100cc ) | Peel strength (N/m) | Bonding strength (N/m) | Thermal shrinkage | | Coating surface density/ coating thicknes s | Bonding strength/ surface density per unit coating | Bonding strength/ coating gas permeab ility |
|---|---|---|---|---|---|---|---|---|
| | | | | MD (%) | TD (%) | | | |
| D7 | 48.5 | 386 | 13.07 | 4.7 | 2.3 | 1.36 | 9.62 | 0.27 |

## Claims

1. A lithium battery separator comprising a porous PVDF-based resin coating, wherein the porous PVDF-based resin coating is located on at least one surface of a base film or a ceramic-coated film, and the porous PVDF-based resin coating on a single side has a thickness of 0.5-3.5 $\mu$m,
   **characterized in that**

   the porous PVDF-based resin coating has a ratio of a bonding strength (N/m) to an increment in Gurley gas permeability value caused by the coating (s/100cc) of greater than or equal to 0.25, and a ratio of a bonding strength (N/m) to a surface density per unit coating (g/m$^2$/$\mu$m) of greater than or equal to 10,
   wherein the bonding strength (N/m) is tested according to standard GB/T 2792,
   the surface density per unit coating (g/m$^2$/$\mu$m) is calculated from

   surface density per unit coating (g/m$^2$/$\mu$m) = coating surface density (g/m$^2$) / coating thickness ($\mu$m),

   the Gurley gas permeability value (s/100cc) is tested as follows:
   a 100mm$\times$100mm separator sample with a porous film is cut, and tested using a Gurley 4110N gas permeability tester from USA under a 100cc test gas pattern; a time at which all of test gas passed through the separator sample with the porous film is recorded as a Gurley value; the Gurley value of the porous film is a value obtained by subtracting a Gurley value of the separator without the porous film from a Gurley value of the separator with the porous film.

2. The lithium battery separator according to claim 1, wherein PVDF-based resin in the porous PVDF-based resin coating comprises high molecular weight PVDF and low molecular weight PVDF, wherein the high molecular weight PVDF has a weight average molecular weight of 800,000-1,200,000, the low molecular weight PVDF has a weight average molecular weight of 200,000-500,000, and a weight ratio of the high molecular weight PVDF to the low molecular weight PVDF is 7:1 to 1:7.

3. The lithium battery separator according to claim 1, wherein the porous PVDF-based resin coating further comprises inorganic particles, and the content of the inorganic particles is 40-80wt% based on a total weight of the porous PVDF-based resin coating.

4. The lithium battery separator according to claim 3, wherein the water content of its slurry is less than 5wt% during preparation of the porous PVDF-based resin coating.

5. The lithium battery separator according to claim 4, wherein the water content of a coagulating bath is 30wt%-70wt% during preparation of the porous PVDF-based resin coating.

6. The lithium battery separator according to claim 5, wherein drying is carried out at a temperature of 60-100°C during preparation of the porous PVDF-based resin coating.

7. A preparation method for the lithium battery separator comprising the porous PVDF-based resin coating according to any one of claims 1 to 6, comprising the specific steps of:

   step 1: dispersing PVDF-based resin and optionally inorganic particles into a solvent to form a coatable slurry, wherein the solvent comprises a good solvent selected from acetone, methyl ethyl ketone, N-methyl pyrrolidone, dimethyl acetamide, diethyl formamide, diethyl acetamide; wherein water content of the slurry on the whole is less than 5 wt%; and

step 2: coating at least one surface of a base film with the coatable slurry, dipping in a coagulating bath at room temperature for solidifying the resulting coating to form the porous PVDF-based resin coating, cleaning, and drying to obtain the lithium battery separator;

wherein the water content of the coagulating bath is 30wt%-70wt%, and the drying is carried out at a temperature of 60°C-100°C.

8. The preparation method according to claim 7, wherein the PVDF-based resin comprises high molecular weight PVDF and low molecular weight PVDF, wherein the high molecular weight PVDF has a weight average molecular weight of 800,000-1,200,000, the low molecular weight PVDF has a weight average molecular weight of 200,000-500,000, and a weight ratio of the high molecular weight PVDF to the low molecular weight PVDF is 7:1 to 1:7.

9. The preparation method according to claim 7, wherein the content of the inorganic particles is 40-80wt% based on a total weight of the porous PVDF-based resin coating.

10. A lithium battery, comprising a positive electrode, a negative electrode, a non-aqueous electrolyte, and the lithium battery separator according to any one of claims 1 to 6 or the lithium battery separator obtained by the preparation method according to claim 7.

**Patentansprüche**

1. Lithiumbatterieseparator, umfassend eine poröse Harzbeschichtung auf PVDF-Basis, wobei sich die poröse Harzbeschichtung auf PVDF-Basis auf zumindest einer Oberfläche eines Basisfilms oder eines keramikbeschichteten Films befindet und die poröse Harzbeschichtung auf PVDF-Basis auf einer einzelnen Seite eine Dicke von 0,5-3,5 $\mu$m aufweist,
**dadurch gekennzeichnet, dass**

die poröse Harzbeschichtung auf PVDF-Basis ein Verhältnis einer Bindungsstärke (N/m) zu einem Anstieg des Gurley-Gasdurchlässigkeitswertes bewirkt durch die Beschichtung (s/100cc) von größer als oder gleich 0,25 und ein Verhältnis einer Bindungsstärke (N/m) zu einer Oberflächendichte pro Beschichtungseinheit (g/m²/$\mu$m) von größer als oder gleich 10 aufweist,
wobei die Bindungsstärke (N/m) nach Standard GB/T 2792 getestet wird,
die Oberflächendichte pro Beschichtungseinheit (g/m²/$\mu$m) berechnet wird aus

Oberflächendichte pro Beschichtungseinheit (g/m²/$\mu$m) = Beschichtungsoberflächendichte (g/m²) / Beschichtungsdicke ($\mu$m),

der Gurley-Gasdurchlässigkeitswert (s/100cc) wie folgt getestet wird:
eine 100 mm x100 mm Separatorprobe mit einem porösen Film wird geschnitten und unter Verwendung eines Gurley-4110N-Gasdurchlässigkeitstesters aus den USA unter einem 100cc-Testgasmuster getestet; eine Zeit, zu der das gesamte Testgas durch die Separatorprobe mit dem porösen Film geleitet wurde, wird als Gurley-Wert aufgezeichnet; der Gurley-Wert des porösen Films ist ein Wert, der durch Abziehen eines Gurley-Wertes des Separators ohne den porösen Film von einem Gurley-Wert des Separators mit dem porösen Film erhalten wird.

2. Lithiumbatterieseparator nach Anspruch 1, wobei Harz auf PVDF-Basis in der porösen Harzbeschichtung auf PVDF-Basis PVDF mit hohem Molekulargewicht und PVDF mit niedrigem Molekulargewicht umfasst, wobei das PVDF mit hohem Molekulargewicht ein gewichtsmittleres Molekulargewicht von 800.000-1.200.000 aufweist, das PVDF mit niedrigem Molekulargewicht ein gewichtsmittleres Molekulargewicht von 200.000-500.000 aufweist und ein Gewichtsverhältnis des PVDF mit hohem Molekulargewicht zu dem PVDF mit niedrigem Molekulargewicht 7:1 bis 1:7 ist.

3. Lithiumbatterieseparator nach Anspruch 1, wobei die poröse Harzbeschichtung auf PVDF-Basis ferner anorganische Partikel umfasst und der Gehalt der anorganischen Partikel 40-80 Gew.-% basierend auf einem Gesamtgewicht der porösen Harzbeschichtung auf PVDF-Basis ist.

4. Lithiumbatterieseparator nach Anspruch 3, wobei der Wassergehalt seines Schlamms weniger als 5 Gew.-%

während Herstellung der porösen Harzbeschichtung auf PVDF-Basis ist.

5. Lithiumbatterieseparator nach Anspruch 4, wobei der Wassergehalt eines Koagulationsbades 30 Gew.-%-70 Gew.-% während Herstellung der porösen Harzbeschichtung auf PVDF-Basis ist.

6. Lithiumbatterieseparator nach Anspruch 5, wobei Trocknen bei einer Temperatur von 60-100 °C während Herstellung der porösen Harzbeschichtung auf PVDF-Basis durchgeführt wird.

7. Herstellungsverfahren für den Lithiumbatterieseparator, umfassend die poröse Harzbeschichtung auf PVDF-Basis nach einem der Ansprüche 1 bis 6, umfassend die folgenden spezifischen Schritte:

Schritt 1: Dispergieren von Harz auf PVDF-Basis und optional anorganischen Partikeln in einem Lösungsmittel, um einen beschichtbaren Schlamm zu bilden, wobei das Lösungsmittel ein gutes Lösungsmittel ausgewählt aus Aceton, Methylethylketon, N-Methylpyrrolidon, Dimethylacetamid, Diethylformamid, Diethylacetamid umfasst; wobei Wassergehalt des Schlamms insgesamt weniger als 5 Gew.-% ist; und
Schritt 2: Beschichten von zumindest einer Oberfläche eines Basisfilms mit dem beschichtbaren Schlamm, Eintauchen in ein Koagulationsbad bei Raumtemperatur zum Verfestigen der resultierenden Beschichtung, um die poröse Harzbeschichtung auf PVDF-Basis zu bilden, Reinigen und Trocknen, um den Lithiumbatterieseparator zu erhalten;
wobei der Wassergehalt des Koagulationsbades 30 Gew.-%-70 Gew.-% ist und das Trocknen bei einer Temperatur von 60 °C-100 °C durchgeführt wird.

8. Herstellungsverfahren nach Anspruch 7, wobei das Harz auf PVDF-Basis PVDF mit hohem Molekulargewicht und PVDF mit niedrigem Molekulargewicht umfasst, wobei das PVDF mit hohem Molekulargewicht ein gewichtsmittleres Molekulargewicht von 800.000-1.200.000 aufweist, das PVDF mit niedrigem Molekulargewicht ein gewichtsmittleres Molekulargewicht von 200.000-500.000 aufweist und ein Gewichtsverhältnis des PVDF mit hohem Molekulargewicht zu dem PVDF mit niedrigem Molekulargewicht 7:1 bis 1:7 ist.

9. Herstellungsverfahren nach Anspruch 7, wobei der Gehalt der anorganischen Partikel 40-80 Gew.-% basierend auf einem Gesamtgewicht der porösen Harzbeschichtung auf PVDF-Basis ist.

10. Lithiumbatterie, umfassend eine positive Elektrode, eine negative Elektrode, einen nichtwässrigen Elektrolyten und den Lithiumbatterieseparator nach einem der Ansprüche 1 bis 6 oder den Lithiumbatterieseparator, der durch das Herstellungsverfahren nach Anspruch 7 erhalten wird.

**Revendications**

1. Séparateur de batterie au lithium comprenant un revêtement de résine à base de PVDF poreux, dans lequel le revêtement de résine à base de PVDF poreux est situé sur au moins une surface d'un film de base ou d'un film revêtu de céramique, et le revêtement de résine à base de PVDF poreux sur un seule face a une épaisseur de 0,5 à 3,5 $\mu$m, **caractérisé en ce que**

le revêtement de résine à base de PVDF poreux a un rapport d'une résistance à l'arrachage (N/m) à un incrément de la valeur de perméabilité aux gaz Gurley causée par le revêtement (s/100cc) supérieur ou égal à 0,25, et un rapport d'une résistance à l'arrachage (N/m) à une densité de surface par unité de revêtement (g/m$^2$/$\mu$m) supérieur ou égal à 10,
dans lequel la résistance à l'arrachage (N/m) est testée selon la norme GB/T 2792,
la densité surfacique par unité de revêtement (g/m$^2$/$\mu$m) est calculée à partir de densité surfacique par unité de revêtement (g/m$^2$/$\mu$m) = densité surfacique du revêtement (g/m$^2$) / épaisseur du revêtement ($\mu$m),

la valeur de perméabilité aux gaz Gurley (s/100cc) est testée comme suit :
un échantillon de séparateur de 100 mm×100 mm avec un film poreux est découpé et testé à l'aide d'un testeur de perméabilité aux gaz Gurley 4110N des États-Unis sous un modèle de gaz d'essai de 100cc ; un temps nécessaire pour que la totalité du gaz d'essai traverse l'échantillon de séparateur avec le film poreux est enregistré en tant que valeur Gurley ; la valeur Gurley du film poreux est une valeur obtenue en soustrayant une valeur Gurley du séparateur sans le film poreux d'une valeur Gurley du séparateur avec le film poreux.

2. Séparateur de batterie au lithium selon la revendication 1, dans lequel la résine à base de PVDF dans le revêtement de résine à base de PVDF poreux comprend du PVDF de poids moléculaire élevé et du PVDF de faible poids moléculaire, dans lequel le PVDF de poids moléculaire élevé a un poids moléculaire moyen en poids de 800 000 à 1 200 000, le PVDF de faible poids moléculaire a un poids moléculaire moyen en poids de 200 000 à 500 000, et un rapport en poids du PVDF de poids moléculaire élevé au PVDF de faible poids moléculaire est de 7:1 à 1:7.

3. Séparateur de batterie au lithium selon la revendication 1, dans lequel le revêtement de résine à base de PVDF poreux comprend en outre des particules inorganiques, et la teneur en particules inorganiques est de 40 à 80 % en poids sur la base d'un poids total du revêtement de résine à base de PVDF poreux.

4. Séparateur de batterie au lithium selon la revendication 3, dans lequel la teneur en eau de sa suspension est inférieure à 5 % en poids pendant la préparation du revêtement de résine à base de PVDF poreux.

5. Séparateur de batterie au lithium selon la revendication 4, dans lequel la teneur en eau d'un bain de coagulation est de 30 % en poids à 70 % en poids pendant la préparation du revêtement de résine à base de PVDF poreux.

6. Séparateur de batterie au lithium selon la revendication 5, dans lequel le séchage est effectué à une température de 60 à 100° C pendant la préparation du revêtement de résine à base de PVDF poreux.

7. Procédé de préparation du séparateur de batterie au lithium comprenant le revêtement de résine à base de PVDF poreux selon l'une quelconque des revendications 1 à 6, comprenant les étapes spécifiques de :

   étape 1 : dispersion de résine à base de PVDF et éventuellement de particules inorganiques dans un solvant pour former une suspension pouvant être revêtue, dans lequel le solvant comprend un bon solvant choisi parmi l'acétone, la méthyléthylcétone, la N-méthylpyrrolidone, le diméthylacétamide, le diéthylformamide, le diéthylacétamide ; dans lequel la teneur en eau de la suspension dans son ensemble est inférieure à 5 % en poids ; et
   étape 2 : revêtement d'au moins une surface d'un film de base avec la suspension pouvant être revêtue, trempage dans un bain de coagulation à température ambiante pour solidifier le revêtement résultant pour former le revêtement de résine à base de PVDF poreux, nettoyage et séchage pour obtenir le séparateur de batterie au lithium ;
   dans lequel la teneur en eau du bain de coagulation est de 30 % en poids à 70 % en poids, et le séchage est effectué à une température de 60° C à 100° C.

8. Procédé de préparation selon la revendication 7, dans lequel la résine à base de PVDF comprend du PVDF de poids moléculaire élevé et du PVDF de faible poids moléculaire, dans lequel le PVDF de poids moléculaire élevé a un poids moléculaire moyen en poids de 800 000 à 1 200 000, le PVDF de faible poids moléculaire a un poids moléculaire moyen en poids de 200 000 à 500 000, et un rapport en poids du PVDF de poids moléculaire élevé au PVDF de faible poids moléculaire est de 7:1 à 1:7.

9. Procédé de préparation selon la revendication 7, dans lequel la teneur en particules inorganiques est de 40 à 80 % en poids sur la base d'un poids total du revêtement de résine à base de PVDF poreux.

10. Batterie au lithium, comprenant une électrode positive, une électrode négative, un électrolyte non aqueux, et le séparateur de batterie au lithium selon l'une quelconque des revendications 1 à 6 ou le séparateur de batterie au lithium obtenu par le procédé de préparation selon la revendication 7.

| 1 µm | EHT = 1.00 kV | Signal A = SE2 | Date: 11 Nov 2021 |
| | WD = 5.5 mm | Mag = 10.00 K X | Time: 11:33:54 |

FIG. 1

| 500 nm | EHT = 1.00 kV | Signal A = SE2 | Date: 15 Nov 2021 |
| | WD = 3.8 mm | Mag = 20.00 K X | Time: 13:35:53 |

FIG. 2

| 1 µm | EHT = 1.00 kV | Signal A = SE2 | Date: 28 Apr 2021 |
| | WD = 4.3 mm | Mag = 10.00 K X | Time: 19:14:24 |

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021116358562